# EUROPEAN PATENT SPECIFICATION

(11) **EP 1 328 096 B1**
(45) Date of publication and mention of the grant of the patent: **17.04.2013**
(21) Application number: 03250136.3
(22) Date of filing: 09.01.2003
(51) Int. Cl.: H04L 1/18, H04L 12/70, H04L 29/06

(54) **Multimedia data packet communication with data type identifiers**
Kommunikation von Multimedia-Datenpaketen mit Datentyp-Identifizierern
Transmission de pacquets de données multimédia avec des identificateurs du type de données

(30) Priority: 10.01.2002 KR 2002001563
(43) Date of publication of application: 16.07.2003
(73) Proprietor: Samsung Electronics Co., Ltd., Suwon-si, Gyeonggi-do, 443-742 (KR)
(72) Inventor: Park,Jeong-Hoon, Paldal-gu Suwon-city Gyunggi-do (KR); Lee, Yung-Iyul, Songpa-gu. Seoul (KR)
(74) Representative: Walaski, Jan Filip

(56) References cited:
- EP-A- 1 006 689
- US-A- 6 031 818
- US-B1- 6 275 471

## Description

The present invention relates to a method of data transmission for multimedia data, the method comprising generating data packets containing multimedia data to be transmitted and transmitting said packets to a remote station using a connectionless protocol, and to a data transmission apparatus for transmitting multimedia data, the apparatus comprising means for generating data packets containing multimedia data to be transmitted and means for transmitting said packets to a remote station using a connectionless protocol.

Data that needs to be transmitted in real-time, such as moving image data, audio data and the like, is transmitted using the Real-time Transport Protocol (RTP) for transmitting real-time application data. However, the RTP protocol standard does not deal with content relating to resource reservation, and in particular, the RTP protocol standard does not provide various functions, such as timely data transmission, guarantee of quality of service and prevention of transmission in erroneous order since it focuses on real-time data transmission. An RTP packet is transmitted using an underlying user datagram protocol.

EP1,006,689 describes a packet retransmission control using priority information. Each packet has additional information relating to its sequence number, priority, and data reproduction time. A retransmission packet storage unit stores packets of which priorities are equal to or higher than a predetermined value.

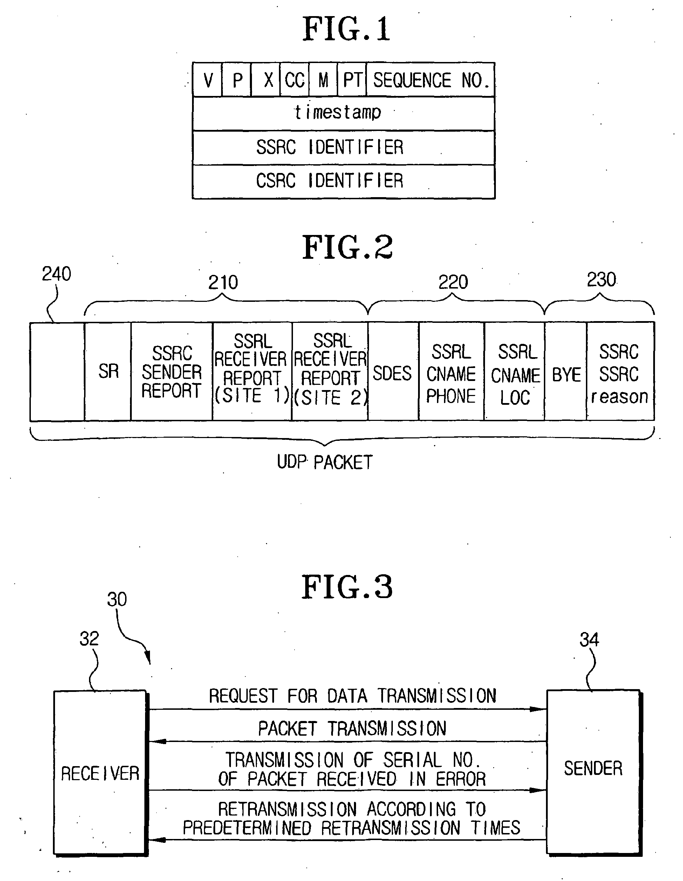

Figure 1 is a format diagram of an RTP packet, in which an RTP packet header has a fixed size and is followed by particular information and data. The header of the RTP packet includes various fields, including a version field V, a flag P indicating whether the packet contains padding octets, a flag X indicating whether there is a header extension, a contributing source count field CC indicating the number of contributing-sources, a flag M for use as a marker for significant events such as frame boundaries, a payload type field PT indicating the format of the payload according to a profile defined in RFC1890, a sequence number field, a timestamp field indicating the point in time when the first octet is sampled, a synchronization source identifier field SSRC indicating the synchronisation source and a contributing sources field CSRC which identifies of the data sources, such as cameras, microphones, etc. If the RTP packet is mixed in an intermediate system, a VSRC field indicates the identifiers capable of identifying the sources.

Control information is transmitted using the real time transport control protocol. For example, in a real-time electronic conference system, RTCP exchanges QoS information, such as the number of packets lost between conference participations, jitter intervals, delay time between preceding and following packets and the like, and thereby allows an application to evaluate the actual QoS and provide adaptive encoding. In addition, to accommodate a large number of participants, the RTCP involves calculating transmission rates for the packets and transmitting minimum session control information designating a participant's ID. Since the source identifiers of data have to be changed to avoid two sources having the same identifier, the RTCP transfers a permanent transport identifier called the Canonical Name. Periodically, the RTCP has to transmit control packets to all participants. To control the participants, several types of RTCP packets have been defined as follows:
(a) SR is used by senders to inform other participants of statistical information on the senders' transmission and/or reception.
(b) RR is used by participants, but not by senders, to generate statistical information on their transmission and/or reception.
(c) SDES is used to describe a name of the source containing CNAME.
(d) BYE is used to escape out of an RTP session.
(e) APP is used to designate a particular function of a new application or a new function.

These RTCP packets are sent in a complex packet format containing at least two packets.

Figure 2 is a format diagram of a plurality of RTCP packets encapsulated in a user datagram protocol (UDP) packet.

Referring to Figure 2, the RTCP packet is followed by a field having a variable length in accordance with a fixed header field and a packet format. SR packet 210, SDES packet 220 and BYE packet 230 are encapsulated in the UDP packet 200.

The RTP packets described with reference to Figures 1 and 2 is transmitted using cable or wireless communication. The situation that the receiver cannot receive properly the whole or a portion of the packet can happen, due to the loss of a portion of a packet, or damage to the data by noise or the like during transmission of an RTP packet,. The RTP packet is encapsulated and transmitted in the UDP packet, which does not guarantee delivery. In addition, it is uncertain whether the data packet from the receiver is received in the correct order. Therefore, in the UDP environment, the receiver has to compensate for the data damage, and also, the receiver has to have a packet duplicating function and a packet rearranging function.

Under the general transmitting environment, the transmitted signal is much affected by the noise, has a high possibility of being damaged by a burst occurring in a specific section of the transmission path, and can be interfered with by other signals. Furthermore, data damage or loss is more serious in wireless sections. A data receipt error is inevitably generated, but UDP is a protocol which does not guarantee the reliable transmission of the data. Therefore, in the case of transmitting/receiving data in UDP packets, the retransmission of the receipt error-occurring data should be guaranteed.

Figure 3 is a signalling diagram of a data retransmission process in a conventional data transmission system.

Referring to Figure 3, in a conventional data transmission system 30, if a receiver 32 requests a data transmission, a sender 34 transmits packets to a receiver 32. The receiver 32 checks for errors in the received packets, and transmits the serial numbers of the error packets to request retransmission. The sender 34 retransmits the packets corresponding to the received packet numbers at predetermined times.

The typical retransmission of a lost packet employs a retransmission method standardized for all data, irrespective of the transmission medium and available bandwidth. Specifically, the number of retransmission times is pre-set, and an error packet is retransmitted within a range of the pre-set number of retransmission times. However, this method does not take into consideration characteristics of multimedia data.

There is also the case in which the data requested to be transmitted does not always have the same influence on restoration of the data. In particular, in moving image data encoded in an MPEG format using intra-image and inter-image coding, restoration quality depends on the respective MPEG images. In addition, the same kind of image may have a different influence on the restoration of the data in accordance with the time-related sequence. Accordingly, there is a need to control retransmission to reflect the characteristics of the data.

The present invention provides, in a first aspect, a method of data transmission as claimed in claim 1, and a data transmission apparatus as claimed in claim 11.

The present invention provides, in a second aspect, a data receiving system as claimed in claim 19 and a data receiving method as claimed in claim 24.

The present invention provides, in a third aspect, a data transmitting/receiving system as claimed in claim 28 and a data transmitting/receiving method as claimed in 34.

Preferably, said parameter or parameters are priority and/or retransmission times.

An embodiment of the present invention will now be described, by way of example, with reference to Figures 4 to 9 of the accompanying drawings, in which:
Figure 1 shows the format of an RTP packet;
Figure 2 illustrates a plurality of RTCP packets encapsulated by an UDP packet;
Figure 3 is a signalling diagram of a data retransmission process in a conventional data transmitting system;
Figure 4 is a block diagram of a data transmission system according to the present invention;
Figure 5 is a flowchart of a data transmission method using the data transmission system shown in Figure 4;
Figure 6 is a block diagram of a data receiving system according to the present invention;
Figure 7 is a flowchart of a data receiving method using the data receiving system shown in Figure 6;
Figure 8 is a block diagram of a data transmission/reception system based upon the data transmission and receiving systems shown in Figures 4 and 6; and
Figure 9 is a flowchart of a data transmission/reception method using the data transmission/reception system shown in Figure 8.

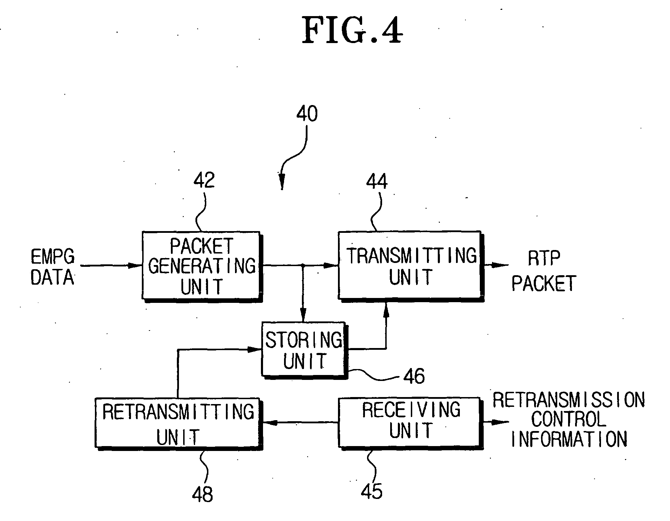

Referring to Figure 4, a data transmitting system 40 comprises a packet generating section 42, a transmitting section 44, a receiving section 45, a storing section 46, and a retransmitting section 48.

The packet generating section 42 generates a data packet containing identifier information according to the kind of data, the sequence of data, and a packet generation sequence. According to an aspect of the invention, the packet generating section 42 generates the data packet according to a real-time transport protocol. The operation of the packet generating section 42 will now be described with an example in which the generated data is moving image data coded in an MPEG format.

MPEG format image data comprises intra-image coded frames encoded with no reference to other image frames and inter-image coded frames encoded with reference to a preceding and/or a following image frame of the image data being encoded. In addition, the inter-image coded frames are ordered according to a time line. In an MPEG image, because only intra-image coded frames only can be restored without reference to other image frames, the intra-image coded frames are provided to enable random access to the video stream and are inserted at constant intervals. Accordingly, in the transmission of the MPEG image data, the intra-image coded frames are more important than the inter-image coded frames. Also, an earlier inter-image coded frame is more important than a later one.

Accordingly, the packet generating section 42 detects the type of the data, i.e. detects whether the data is an intra-image coded frame or the inter-image coded frame and records the data type information in the header of the RTP packet. The data type information may be recorded in a reserved field of the RTP header for which a use is not specified in the relevant RFCs, or a field may be added to the RTP header.

In addition, the packet generating section 42 detects/maintains a packet generating sequence for the data, i.e. the sequence of a divided frame to record as the packet generating sequence information in the header of the RTP packet. In particular, because of transmission problems, such as low transmission bandwidth or large transmission delay, in real-time multimedia transmission, one packet is typically divided into a plurality of packets, and then the divided packets are transmitted. Generally, each RTP packet is 256 bytes, 512 bytes or the like. Accordingly, the packet generating section 42 also records as part of the identifier information the data sequence and the packet generation sequence of the RTP packet, as follows.

For example, a first intra-image coded frame I1 is divided into five RTP packets and then the five RTP packets are transmitted. In this example, the packet generating section 42 generates identifier information, such as I1a, I1b, I1c, I1d, He, for the intra-image coded frame I1. The identifier information I1a, I1b, I1c, I1d and I1e is added to the five RTP packet headers for the intra-image coded frame I1. In the identifier information, I indicates a packet generated from the intra-image coded frame, 1 indicates the first intra-image coded frame, and 'a' to 'e' indicate the packet generation sequence position of an RTP packet.

The packet generating section 42 generates the RTP packets for the intra-image coded frames and the inter-image coded frames, to which the identifier information generated by the aforementioned method is added. Although a specific type of identifier information has been described hereinbefore, the identifier information may be generated in various formats. Specifically, the identifier information may be generated in any format capable of indicating the type and sequence of the data and the packet order.

In the case that the RTP packet is transmitted over a wireless communication link, according to an aspect of the invention, the data transmitting system further comprises a packet transforming section for transforming RTP packets into radio link protocol packets. This is because, typically, transmission between a mobile station and a base station is achieved using an RLP unit that is a transmission unit of a radio link layer.

The RTP packets generated by the packet generating section 42 are stored in the storing section 46. Upon a retransmission request from a receiving system, the appropriate RTP packet, stored in the storing section 46, is read and retransmitted to the receiver system.

The packet transmitting section 44 transmits the RTP packets, and the receiving section 45 receives retransmission control information. In a wireless communication environment, the RTP data packeted by the RLP is transmitted. The retransmission control information is received in a real-time transport control protocol packet.

The retransmitting section 48 retransmits a lost or corrupted data packet, according to received retransmission control information. The retransmission control information comprises the packet number of the lost or corrupted data packet, and a number of retransmission times. Typical reception errors are loss of an RTP packet and receipt of a corrupted RTP packet. The retransmission control information is information, such as packet number, number of retransmitting times, retransmission priority and the like, set by the receiving system, based at least on the identifier information in received data packets. After the retransmitting section 48 determines the packet number of the lost or corrupted RTP packet from the retransmission control information, the retransmitting section retransmits the RTP packet requested to be retransmitted, according to the number of retransmission times set for the respective packet number.

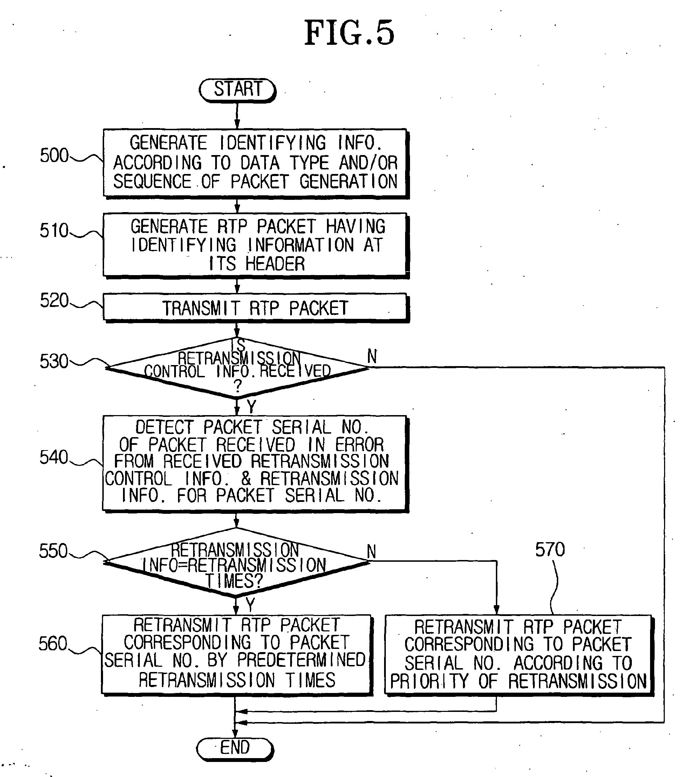

Referring to Figure 5, at operation 500, the packet generating section 42 generates the identifier information comprising the data type and sequence, and a packet generation sequence for the data. At operation 510, the packet generating section 42 adds the generated identifier information to the RTP packet header to generate the RTP packet. At operation 520, the generated RTP packet is transmitted by the transmitting section 44 to the receiving system.

At operation 530, after transmission of the generated RTP packet, if the retransmitting section 48 receives retransmission control information through the receiving section 45, at operation 540, the retransmitting section 48 determines the packet number and retransmission information for the lost or corrupted packet from the received retransmission control information. The retransmission information comprises a number of retransmission times, a retransmission priority or the like.

At operation 550, the retransmitting section 48 determines whether the retransmission information specifies a number of retransmission times. If, at operation 550, the retransmission information specifies the number of retransmission times, at operation 560, the retransmitting section 48 retransmits the lost or corrupted RTP packet according to the number of retransmission times set for it. In the case that, at operation 550, the retransmission information specifies a retransmission priority, at operation 570, the retransmitting section 48 retransmits an RTP packet corresponding to the packet number according to the specified retransmission priority.

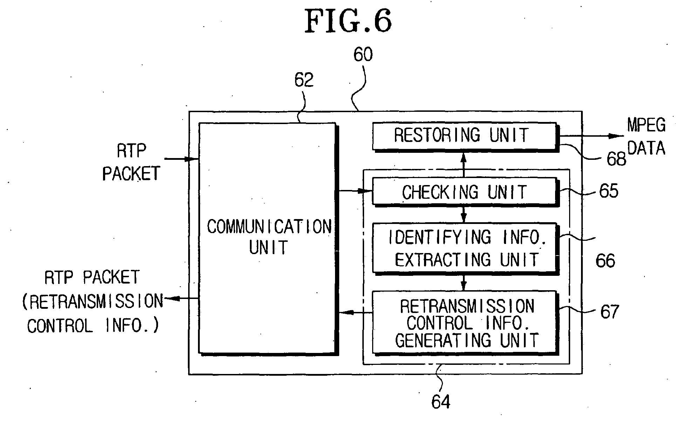

Referring to Figure 6, a data receiving system 60 comprises a communication section 62, a retransmission control section 64 and a packet restoring section 68. The communication section 62 receives an RTP packet from the transmitting system 40, and transmits retransmission control information. If the restoring section 68 receives an RTP packet, which may be a retransmitted packet, with no errors, the restoring section 68 extracts the data from the RTP packet to restore the MPEG data.

Typically, if an RTP packet is corrupted, the header will not be corrupted and the retransmission control section 64 extracts the identifier information from the uncorrupted header of the corrupted RTP packet and generates retransmission control information according to the extracted identifier information. Otherwise, in the cases of lost RTP packets, including RTP packets with corrupted headers, the identifying section 65 can determine the packet number and identifier information for lost packet based upon the sequence number field in the RTP header and/or identifier information, of other related RTP packets which have not been lost.

In particular, the retransmission control section 64 comprises an identifying section 65, an identifier information extracting section 66 and a retransmission control information generating section 67. The identifying section 65 checks for errors in received RTP packets. Typical receiving errors are non-receipt of an RTP packet, and the receipt of an RTP packet with lost bits. In the case that there are no receiving errors, the identifying section 65 provides the received RTP packet to the restoring unit 68. The identifying section 65 detects packet numbers for corrupted packets based upon the identifier information recorded in the normally received headers of the corrupted RTP packet. In case of a lost RTP packets, the identifying section 65 determines their packet numbers and identifying information based upon the sequence number field and/or identifier information recorded in the headers of other RTP packets which have been received normally.

In the case that the header of a corrupted RTP packet has been received normally, the identifier information extracting section 66 extracts the identifier information of the received corrupted RTP packet. Otherwise, in case of a lost RTP packet, the identifier information extracting section 66 extracts the identifier information from the RTP packet used by the identifying section 65 to determine the RTP packet number or uses other predetermined identifier information taking into consideration characteristics of the data. The identifier information is the information generated at the transmitting system 40 based on a kind of data, a sequence of data, and a packet generation sequence.

The retransmission control information generating section 67 generates the retransmission control information comprising the packet number of the lost or corrupted data packet and a number of retransmission times according to the extracted identifier information. According to an aspect of the invention, the retransmission control information can comprise the packet number of the data packet and/or a retransmission priority set according to the extracted identifier information designating a magnitude of the received error-occurring RTP packet. The generated retransmission control information is transmitted to the data transmitting system 40 through the communication section 62.

If the data receiving system 60 extracts both the packet number and the identifier information of the received error-occurring RTP packet, by using only the identifier information recorded in the header of the RTP packets, the functions of the identifying section 65 and the identifier information extracting section 66 may be combined.

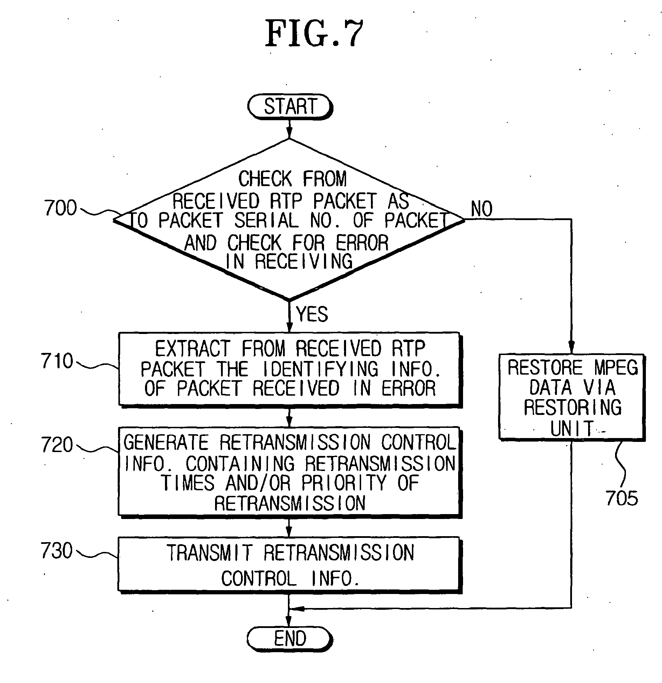

Referring to Figure 7, at operation 700, when RTP packets are received through the communication section 62, the identifying section 65 checks the packet numbers of the packet based on the identifier information recorded in normally-received headers of the RTP packet. As described above, the identifying section 65 may, for example, confirm the packet number of the packet based upon the packet generating sequence number recorded in a sequence number field of the RTP packet header which has been normally received.

If it is determined at operation 700 that a receiving error has occurred, at operation 710 the identifier information extracting section 66 extracts the identifier information of the received corrupted RTP packet, based on the identifier information recorded in its normally-received header. If it is determined at operation 700 that an RTP packet has been received normally, at operation 705, the MPEG data is restored via the restoring section 68.

At operation 720, the retransmission control information generating section 67 generates the retransmission control information comprising the packet number of the received error-occurring data packet and a number of retransmission times according to the extracted identifier information. Alternatively, the retransmission control information can comprise the packet number of the data packet and/or a retransmission priority set according to the identifier information. At operation 730, the generated retransmission control information is transmitted to the data transmitting system 40 through the communication section 62.

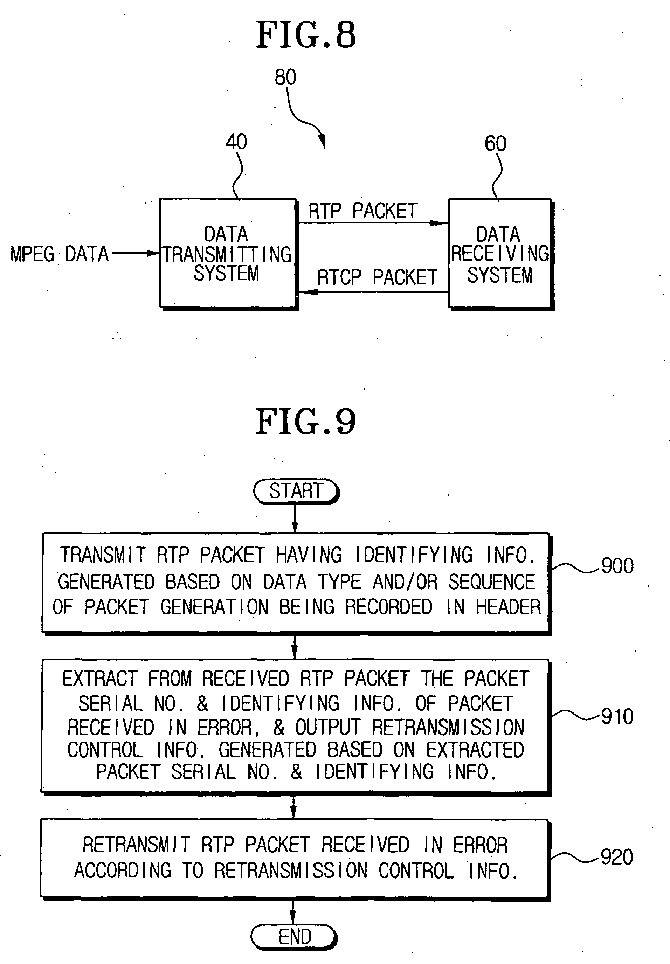

Referring to Figures 8 and 9, the data transmission/reception system 80 comprises the data transmitting section 40 and the data receiving section 60.

At operation 900, the data transmitter 40 transmits the RTP packet containing identifier information for the data. When the data receiver 60 receives the RTP packet, in case of error, at operation 910, the receiver 60 extracts the identifier information from the received RTP packet and transmits retransmission control information using the RTCP standard to the transmitter 40. When the transmitter 40 receives the retransmission control information from the receiver 60, at operation 920, the transmitter 40 retransmits the error-occurring RTP packet according to the received retransmission control information.

Although the above example data communication methods are via cable, the present invention is not limited to wire data systems, and may be applied to wireless communication systems. Furthermore, the data transmitting method and the data receiving method according to the present invention can also be applied using protocols other than RTP. The processes of the invention to control retransmissions responsive to data characteristics of lost/damaged data can be embodied in software and/or hardware, for example, as part of the networked data transmitter 40 and the data receiver 60, using known techniques.

Further, according to the invention, retransmission control is based upon a number of retransmissions and retransmission priority. For example, regarding data packets containing intra-image coded frames, the number of retransmission times can be set to three, while for inter-image coded frames, the number of retransmission times can be set to two. Specifically, the number of retransmissions can be variable or dynamic depending on characteristics of the data, for example, taking into consideration restoration significance of the error-occurring frame. Furthermore, in a case that the number of retransmission times has an affect on a delay time so that the delay between the terminals becomes long, if the transmitter 40 receives a retransmission request of an intra-image, a continuously overlapped packet may be transmitted in succession, such as 2 times and 3 times, thereby reducing the probability of losing the packet. Further, retransmission priorities of image frames can be set to depend upon image frame characteristics.

According to the data transmitting/receiving system and method according to the present invention, the number of retransmission times and the retransmission priority are varied according to the characteristic of the transmitted data, so that retransmission is suitable for the characteristics of the data and to more stably receive the data that is more influential to restorationof the data. In particular, in a case that the data is transmitted by the RTP packet, the present invention can stream the image so that it is effectively decoded during restoration of the data at a precedence layer of the application program.

## Claims

1. A method of data transmission for multimedia data, the method comprising generating (500) data packets containing multimedia data to be transmitted and transmitting (520) said packets to a remote station using a connectionless protocol, wherein the data comprises intra-image coded frames and inter-image coded frames, and data for each frame is divided among a plurality of said packets,
the method comprising adding identifier information to the intra-image coded frames, the identifier information specifying a higher retransmission priority for the intra-image coded frames than for the inter-image coded frames;
wherein the identifier information comprises a data type identifier providing an indication of an intra-image coded frame or an inter-image coded frame, a sequence identifier of the position of the frame in the transmission, and a packet generation sequence identifier identifying the packet generation sequence position of the packet among the plurality of packets forming each frame.

2. A method of receiving data transmitted by a method according to claim 1, the method comprising detecting lost or corrupted packets, determining the data type identifiers for the lost or corrupted packets, and requesting retransmission of lost or corrupted packets, wherein one or more parameters for the requested retransmissions is set in dependence on the determined data type identifiers.

3. A method according to claim 2, wherein said parameter or parameters are priority and/or retransmission times.

4. The method as claimed in claim 1, wherein the identifier information is added to a header of the data packet.

5. The method as claimed in claim 1 or 4, further comprising:
receiving retransmission control information on an error-occurring data packet; and
retransmitting the error-occurring data packet according to the retransmission control information.

6. The method as claimed in claim 5, wherein the retransmission control information comprises a packet number of the error-occurring data packet, and a number of retransmission times.

7. The method as claimed in claim 6, wherein a data packet corresponding to the packet number is retransmitted according to the number of retransmission times set for the packet number.

8. The method as claimed in any one of claims 1, 4 or 5, wherein the retransmission control information comprises a packet number of the error-occurring data packet, and a retransmission priority.

9. The method as claimed in claim 8, wherein a data packet corresponding to the packet number is retransmitted according to the retransmission priority set for each data packet.

10. The method as claimed in any one of claims 1 or 4 to 9, wherein the data packet is transmitted by a real-time transport protocol.

11. A data transmission apparatus for transmitting multimedia data, the apparatus comprising means (42) for generating data packets containing multimedia data to be transmitted and means (44) for transmitting said packets to a remote station using a connectionless protocol, wherein the data comprises intra-image coded frames and inter-image coded frames, and data for each frame is divided among a plurality of said packets,
the data packet generating means being configured to add identifier information to the intra-image coded frames, the identifier information specifying a higher retransmission priority for the intra-image coded frames than for the inter-image coded frames.
wherein the identifier information comprises a data type identifier providing an indication of an intra-image coded frame or an inter-image coded frame, a sequence identifier of the position of the frame in the transmission, and a packet generation sequence identifier identifying the packet generation sequence position of the packet among the plurality of packets forming each frame.

12. The data transmission apparatus as claimed in claim 11 comprising:
a packet generator (42) for generating the data packets containing identifier information according to a kind of frame, a sequence of frames, and a packet generating sequence of a packet forming a said frame;
a packet transmitter (44) for transmitting the data packet containing the identifier information;
a receiver (45) for receiving retransmission control information, which are based upon the identifier information, for an error-occurring data packet; and
a retransmitter (48) for retransmitting the error-occurring data packet according to the retransmission control information.

13. The data transmission apparatus as claimed in claim 12, wherein the packet generator (42) is arranged to add the identifier information to a header of the data packet.

14. The data transmission apparatus as claimed in claim 12, wherein the retransmission control information comprises a packet number of the error-occurring data packet, and a number of retransmission times.

15. The data transmission apparatus as claimed in claim 14, wherein the retransmitter (48) is arranged to retransmit a data packet corresponding to the packet number according to the number of retransmission times set for the packet number.

16. The data transmission apparatus as claimed in claim 12, wherein the retransmission control information comprises a packet number of the error-occurring data packet, and a retransmission priority.

17. The data transmission apparatus as claimed in any one of claims 12 to 16, wherein the retransmitter (48) is arranged to retransmit a data packet corresponding to the packet number according to the retransmission priority set for each data packet.

18. The data transmission apparatus as claimed in claim 12, wherein the data packet is transmitted by a real-time transport protocol.

19. A data receiving system (60), comprising:
a data communicator (62) receiving a data packet, and transmitting retransmission control information of a received error-occurring data packet;
wherein the data comprises intra-image coded frames and inter-image coded frames, and data for each frame is divided among a plurality of said packets, and
a retransmission controller (64) determining a packet number and identifier information of the received error-occurring data packet, the identifier information containing information regarding an indication of an intra-image coded frame or an inter-image coded frame, a sequence identifier of the position of the frame in the transmission, and a packet generation sequence identifier identifying the packet generation sequence position of the packet among the plurality of packets forming each frame,
, generating the retransmission control information according to the determined packet number and the identifier information, and outputting the retransmission control information;
and the identifier information is included in the intra-image coded frames, the identifier information specifying a higher retransmission priority for the intra-image coded frames than for the inter-image coded frames.

20. The data receiving system as claimed in claim 19, wherein the retransmission controller comprises:
an identifier (65) for identifying the packet number of the received error-occurring data packet;
an identifier information determiner (66) for determining the identifier information of the received error-occurring data packet; and
a retransmission control information generator (67) for generating the retransmission control information.

21. The data receiving system as claimed in claim 19 or 20, wherein the retransmission control information comprises a packet number of the received error-occurring data packet, and a number of retransmission times.

22. The data receiving system as claimed in claim 19 or 20, wherein the retransmission control information comprises a packet number of the received error-occurring data packet, and a retransmission priority.

23. The data receiving system as claimed in any one of claims 19 to 22, wherein the retransmission control information is transmitted by a real-time transport control protocol.

24. A data receiving method, comprising:
identifying a packet number of a received error-occurring data packet; wherein the data comprises intra-image coded frames and inter-image coded frames, and data for each frame is divided among a plurality of said packets,
determining (710) identifier information of the received error-occurring data packet, the identifier information containing information about an indication of an intra-image coded frame or an inter-image coded frame, a sequence identifier of the position of the frame in the transmission, and a packet generation sequence identifier identifying the packet generation sequence position of the packet among the plurality of packets forming each frame, and a packet generating sequence of a packet forming a said frame;
generating (720) retransmission control information based on the determined packet number and the identifier information; and
transmitting (730) the generated retransmission control information;
wherein the data comprises intra-image coded frames and inter-image coded frames, and the identifier information is included in the intra-image coded frames, the identifier information specifying a higher retransmission priority for the intra-image coded frames than for the inter-image coded frames.

25. The data receiving method as claimed in claim 24, wherein the retransmission control information comprises a packet number of the received error-occurring data packet, and a number of retransmission times.

26. The data receiving method as claimed in claim 24, wherein the retransmission control information comprises a packet number of the received error-occurring data packet, and a retransmission priority.

27. The data receiving method as claimed in any one of claims 24 to 26, wherein the retransmission control information is transmitted by a real-time transport control protocol.

28. A data transmitting/receiving system (80), comprising:
a data transmitter (40) as claimed in claim 11; and
a data receiver (60) as claimed in claim 19.

29. The data transmitting/receiving system as claimed in claim 28, wherein the data transmitter comprises a data transmitting apparatus according to any one of claims 13 to 18.

30. The data transmitting/receiving system as claimed in claim 28 or 29, wherein the data receiver comprises a data receiving system according to any one of claims 20 to 23.

31. A data transmitting/receiving system as claimed in claim 30 for transmitting/receiving streaming multimedia data over a network, wherein:
the data transmitter (40) comprises a programmed computer processor detecting frame types of the multimedia data, generating identifying information based upon the frame types, generating RTP data packets containing the identifying information, transmitting the generated RTP data packets and retransmitting lost and/or damaged RTP data packets according to received retransmission control information; and
the data receiver (60) comprising a programmed computer processor receiving the generated RTP data packets, generating retransmission control information based upon the identifier information in the received RTP data packets upon the loss of and/or damage to the RTP data packets, transmitting the retransmission control information to the transmitter, and receiving the retransmitted lost and/or damaged RTP data packets.

32. The data transmitting/receiving system of claim 31, wherein the processor further generates as the identifier information a packet generating sequence corresponding to divided frames transmitted in the RTP data packets.

33. The data transmitting/receiving system of claim 31 or 32, wherein the multimedia data is encoded according to MPEG standard.

34. A data transmitting/receiving method, comprising:
the method of data transmission as claimed in claim 1; and
the data receiving method as claimed in claim 24.

35. The data transmitting/receiving method as claimed in claim 34, wherein the identifier information is added to a header of the data packet.

36. The data transmitting/receiving method as claimed in claim 34, wherein the data packet is transmitted by a real-time transport protocol.

37. The data transmitting/receiving method as claimed in claim 34, wherein outputting of the retransmitting control information comprises:
identifying a packet number of the received error-occurring data packet;
determining the identifier information of the received error-occurring data packet;
generating the retransmission control information based on the determined packet number and the identifier information; and
transmitting the generated retransmission control information.

38. The data transmitting/receiving method as claimed in claim 37, wherein the retransmission control information comprises a packet number of the received error-occurring data packet, and a number of retransmission times.

39. The data transmitting/receiving method as claimed in claim 38, further comprising retransmitting a data packet, in response to a retransmission request, according to the retransmission times set for the packet number.

40. The data transmitting/receiving method as claimed in claim 38, wherein the retransmission control information comprises a packet number of the received error-occurring data packet, and a retransmission priority.

41. The data transmitting/receiving method as claimed in claim 40, further comprising retransmitting a data packet, in response to a retransmission request, according to the retransmission priority set for each data packet.

42. The data transmitting/receiving method as claimed in claim 34, wherein the retransmission control information is transmitted by a real-time transport control protocol.

43. A method as claimed in claim 34 of streaming multimedia data over a network, comprising:
controlling RTP data packet retransmissions upon lost and/or damaged data packets according to streaming-restoration characteristics of the multimedia data
wherein the data comprises intra-image coded frames and inter-image coded frames, and the identifier information is included in the intra-image coded frames, the identifier information specifying a higher retransmission priority for the intra-image coded frames than for the inter-image coded frames.

## Patentansprüche

1. Datenübertragungsverfahren für Multimedia-Daten, wobei das Verfahren das Erzeugen (500) von Datenpaketen, die zu übertragende Multimedia-Daten enthalten, und das Übertragen (520) der genannten Pakete unter Verwendung eines verbindungslosen Protokolls an eine ferne Station umfasst, wobei die Daten intrabildcodierte Rahmen und interbildcodierte Rahmen umfassen und Daten für jeden Rahmen auf eine Vielzahl der genannten Pakete verteilt sind,
wobei das Verfahren das Hinzufügen von Identifikatorinformationen zu intrabildcodierten Rahmen aufweist, wobei die Identifikatorinformationen eine höhere Retransmissionspriorität für die intrabildcodierten Rahmen als für die interbildcodierten Rahmen spezifizieren,
wobei die Identifikatorinformationen einen Datentyp-Identifikator, der eine Anzeige eines intrabildcodierten Rahmens oder eines interbildcodierten Rahmens bereitstellt, einen Sequenzidentifikator der Position des Rahmens in der Übertragung und einen Paketerzeugungssequenzidentifikator umfassen, der die Position des Pakets in der Paketerzeugungssequenz unter der Vielzahl von Paketen, die jeden Rahmen bilden, kennzeichnet.

2. Verfahren zum Empfangen von mit einem Verfahren nach Anspruch 1 übertragenen Daten, wobei das Verfahren das Erkennen verlorener oder beschädigter Pakete, Ermitteln der Datentyp-Identifikatoren für die verlorenen oder beschädigten Pakete und Anfordern der Retransmission von verlorenen oder beschädigten Paketen umfasst, wobei ein oder mehrere Parameter für die angeforderten Retransmissionen in Abhängigkeit von den ermittelten Datentyp-Identifikatoren gesetzt werden.

3. Verfahren nach Anspruch 2, wobei der genannte oder die genannten Parameter Priorität und/oder Retransmissionen sind.

4. Verfahren nach Anspruch 1, wobei die Identifikatorinformationen zu einem Header des Datenpakets hinzugefügt werden.

5. Verfahren nach Anspruch 1 oder 4, das ferner Folgendes aufweist:
Empfangen von Retransmissionssteuerinformationen über ein Datenpaket, bei dem ein Fehler auftrat, und
Retransmission des Datenpakets, bei dem ein Fehler auftrat, gemäß den Retransmissionsteuerinformationen.

6. Verfahren nach Anspruch 5, wobei die Retransmissionssteuerinformationen eine Paketnummer des Datenpakets, bei dem ein Fehler auftrat, und eine Retransmissionenzahl aufweisen.

7. Verfahren nach Anspruch 6, wobei ein der Paketnummer entsprechendes Datenpaket gemäß der für die Paketnummer festgelegten Retransmissionenzahl wiederholt übertragen wird.

8. Verfahren nach einem der Ansprüche 1, 4 und 5, wobei die Retransmissionssteuerinformationen eine Paketnummer des Datenpakets, bei dem ein Fehler auftrat, und eine Retransmissionspriorität aufweisen.

9. Verfahren nach Anspruch 8, wobei ein der Paketnummer entsprechendes Datenpaket gemäß der für jedes Datenpaket festgelegten Retransmissionspriorität wiederholt übertragen wird.

10. Verfahren nach einem der Ansprüche 1 und 4 bis 9, wobei das Datenpaket von einem Echtzeit-Transportprotokoll übertragen wird.

11. Datenübertragungsvorrichtung zur Übertragung von Multimedia-Daten, wobei die Vorrichtung eine Einrichtung (42) zum Erzeugen von Datenpaketen, die zu übertragende Multimedia-Daten enthalten, und eine Einrichtung (44) zum Übertragen der genannten Pakete unter Verwendung eines verbindungslosen Protokolls an eine ferne Station umfasst, wobei die Daten intrabildcodierte Rahmen und interbildcodierte Rahmen umfassen und Daten für jeden Rahmen auf eine Vielzahl der genannten Pakete verteilt sind,
wobei die Datenpaketerzeugungseinrichtung zum Hinzufügen von Identifikatorinformationen zu den intrabildcodierten Rahmen konfiguriert ist, wobei die Identifikatorinformationen eine höhere Retransmissionspriorität für die intrabildcodierten Rahmen als für die interbildcodierten Rahmen spezifizieren,
wobei die Identifikatorinformationen einen Datentyp-Identifikator, der eine Anzeige eines intrabildcodierten Rahmens oder eines interbildcodierten Rahmens bereitstellt, einen Sequenzidentifikator der Position des Rahmens in der Übertragung und einen Paketerzeugungssequenzidentifikator umfassen, der die Position des Pakets in der Paketerzeugungssequenz unter der Vielzahl von Paketen, die jeden Rahmen bilden, kennzeichnet.

12. Datenübertragungsvorrichtung nach Anspruch 11, die Folgendes aufweist:
einen Paketgenerator (42) zum Erzeugen der Datenpakete, die Identifikatorinformationen gemäß einer Rahmenart, einer Rahmensequenz und einer Paketerzeugungssequenz eines einen genannten Rahmen bildenden Pakets enthalten.
einen Paketsender (44) zum Übertragen des die Identifikatorinformationen enthaltenden Datenpakets,
einen Empfänger (45) zum Empfangen von auf den Identifikatorinformationen basierenden Retransmissionssteuerinformationen für ein Datenpaket, bei dem ein Fehler auftrat, und
einen Retransmitter (48) zur Retransmission des Datenpakets, bei dem ein Fehler auftrat, gemäß den Retransmissionssteuerinformationen.

13. Datenübertragungsvorrichtung nach Anspruch 12, wobei der Paketgenerator (42) zum Hinzufügen von Identifikatorinformationen zu einem Header des Datenpakets angeordnet ist.

14. Datenübertragungsvorrichtung nach Anspruch 12, wobei die
Retransmissionssteuerinformationen eine Paketnummer des Datenpakets, bei dem ein Fehler auftrat, und eine Retransmissionenzahl aufweisen.

15. Datenübertragungsvorrichtung nach Anspruch 14, wobei der Retransmitter (48) zur Retransmission eines der Paketnummer entsprechenden Datenpakets gemäß der für die Paketnummer festgelegten Retransmissionenzahl angeordnet ist.

16. Datenübertragungsvorrichtung nach Anspruch 12, wobei die Retransmissionssteuerinformationen eine Paketnummer des Datenpakets, bei dem ein Fehler auftrat, und eine Retransmissionspriorität aufweisen.

17. Datenübertragungsvorrichtung nach einem der Ansprüche 12 bis 16, wobei der Retransmitter (48) zur Retransmission eines der Paketnummer entsprechenden Datenpakets gemäß der für jedes Datenpaket festgelegten Retransmissionspriorität angeordnet ist.

18. Datenübertragungsvorrichtung nach Anspruch 12, wobei das Datenpaket von einem Echtzeit-Transportprotokoll übertragen wird.

19. Datenempfangssystem (60), umfassend:
einen Datenkommunikator (62), der ein Datenpaket empfängt und Retransmissionssteuerinformationen eines empfangenen Datenpakets, bei dem ein Fehler auftrat, sendet,
wobei die Daten intrabildcodierte Rahmen und interbildcodierte Rahmen umfassen und Daten für jeden Rahmen auf eine Vielzahl der genannten Pakete verteilt sind, und
eine Retransmissionssteuerung (64), die eine Paketnummer und Identifikatorinformationen des empfangenen Datenpakets, bei dem ein Fehler auftrat, ermittelt, wobei die Identifikatorinformationen Informationen bezüglich einer Anzeige eines intrabildcodierten Rahmens oder eines interbildcodierten Rahmens, einen Sequenzidentifikator der Position des Rahmens in der Übertragung und einen Paketerzeugungssequenzidentifikators, der die Position des Pakets in der Paketerzeugungssequenz unter der Vielzahl von Paketen, die jeden Rahmen bilden, kennzeichnet, enthalten,
die Retransmissionssteuerinformationen gemäß der ermittelten Paketnummer und der Identifikatorinformationen erzeugt und die Retransmissionssteuerinformationen ausgibt,
und die Identifikatorinformationen in den intrabildcodierten Rahmen eingeschlossen sind, wobei die Identifikatorinformationen eine höhere Retransmissionspriorität für die intrabildcodierten Rahmen als für die interbildcodierten Rahmen spezifizieren.

20. Datenempfangssystem nach Anspruch 19, wobei die Retransmissionssteuerung Folgendes umfasst:
einen Identifikator (65) zum Kennzeichnen der Paketnummer des empfangenen Datenpakets, bei dem ein Fehler auftrat,
einen Identifikatorinformationenermittler (66) zum Ermitteln der Identifikatorinformationen des empfangenen Datenpakets, bei dem ein Fehler auftrat, und
einen Retransmissionssteuerinformationsgenerator (67) zum Erzeugen von Retransmissionssteuerinformationen.

21. Datenempfangssystem nach Anspruch 19 oder 20, wobei die Retransmissionssteuerinformationen eine Paketnummer des empfangenen Datenpakets, bei dem ein Fehler auftrat, und eine Retransmissionenzahl aufweisen.

22. Datenempfangssystem nach Anspruch 19 oder 20, wobei die Retransmissionssteuerinformationen eine Paketnummer des empfangenen Datenpakets, bei dem ein Fehler auftrat, und eine Retransmissionspriorität aufweisen.

23. Datenempfangssystem nach einem der Ansprüche 19 bis 22, wobei die Retransmissionssteuerinformationen von einem Echtzeit-Transportsteuerungsprotokoll übertragen werden.

24. Datenempfangsverfahren, umfassend:
Identifizieren einer Paketnummer eines empfangenen Datenpakets, bei dem ein Fehler auftrat, wobei die Daten intrabildcodierte Rahmen und interbildcodierte Rahmen umfassen und Daten für jeden Rahmen auf eine Vielzahl der genannten Pakete verteilt sind,
Ermitteln (710) von Identifikatorinformationen des empfangenen Datenpakets, bei dem ein Fehler auftrat, wobei die Identifikatorinformationen Informationen über eine Anzeige eines intrabildcodierten Rahmens oder eines interbildcodierten Rahmens, einen Sequenzidentifikator der Position des Rahmens in der Übertragung und einen Paketerzeugungssequenzidentifikator, der die Position des Pakets in der Paketerzeugungssequenz unter der Vielzahl von Paketen, die jeden Rahmen bilden, kennzeichnet, und eine Paketerzeugungssequenz eines Pakets, das einen genannten Rahmen bildet, enthalten,
Erzeugen (720) von Retransmissionssteuerinformationen auf der Basis der ermittelten Paketnummer und der Identifikatorinformationen und
Übertragen (730) der erzeugten Retransmissionssteuerinformationen,
wobei die Daten intrabildcodierte Rahmen und interbildcodierte Rahmen umfassen und die Identifikatorinformationen in den intrabildcodierten Rahmen eingeschlossen sind, wobei die Identifikatorinformationen eine höhere Retransmissionspriorität für die intrabildcodierten Rahmen als für die interbildcodierten Rahmen spezifizieren.

25. Datenempfangsverfahren nach Anspruch 24, wobei die Retransmissionssteuerinformationen eine Paketnummer des empfangenen Datenpakets, bei dem ein Fehler auftrat, und eine Retransmissionenzahl aufweisen.

26. Datenempfangsverfahren nach Anspruch 24, wobei die Retransmissionssteuerinformationen eine Paketnummer des Datenpakets, bei dem ein Fehler auftrat, und eine Retransmissionspriorität aufweisen.

27. Datenempfangsverfahren nach einem der Ansprüche 24 bis 26, wobei die Retransmissionssteuerinformationen von einem Echtzeit-Transportsteuerungsprotokoll übertragen werden.

28. Datenübertragungs-/-empfangssystem (80), umfassend:
einen Datensender (40) nach Anspruch 11, und
einen Datenempfänger (60) nach Anspruch 19.

29. Datenübertragungs-/-empfangssystem nach Anspruch 28, wobei der Datensender eine Datenübertragungsvorrichtung nach einem der Ansprüche 13 bis 18 umfasst.

30. Datenübertragungs-/-empfangssystem nach Anspruch 28 oder 29, wobei der Datenempfänger ein Datenempfangssystem nach einem der Ansprüche 20 bis 23 umfasst.

31. Datenübertragungs-/-empfangssystem nach Anspruch 30 zum Übertragen/Empfangen von Streaming-Multimedia-Daten über ein Netzwerk, wobei:
der Datensender (40) einen programmierten Computerprozessor umfasst, der Rahmentypen der Multimedia-Daten erkennt, auf Basis der Rahmentypen identifizierende Informationen erzeugt, die identifizierenden Informationen enthaltenden RTP-Datenpakete erzeugt, die erzeugten RTP-Datenpakete überträgt und verlorene und/oder beschädigte RTP-Datenpakete gemäß empfangenen Retransmissionssteuerinformationen wiederholt überträgt, und
der Datenempfänger (60) einen programmierten Computerprozessor umfasst, der die erzeugten RTP-Datenpakete empfängt, bei Verlust und/oder Beschädigung der RTP-Datenpakete Retransmissionssteuerinformationen auf Basis der Identifikatorinformationen in den empfangenen RTP-Datenpaketen erzeugt, die Retransmissionssteuerinformationen an den Sender überträgt und die wiederholt übertragenen verlorenen und/oder beschädigten RTP-Datenpakete empfängt.

32. Datenübertragungs-/-empfangssystem nach Anspruch 31, wobei der Prozessor ferner als die Identifikatorinformationen eine Paketerzeugungssequenz, die in den RTP-Datenpaketen übertragenen, unterteilten Rahmen entspricht, erzeugt.

33. Datenübertragungs-/-empfangssystem nach Anspruch 31 oder 32, wobei die Multimedia-Daten gemäß dem MPEG-Standard codiert werden.

34. Datenübertragungs-/-empfangsverfahren, umfassend:
das Verfahren zur Datenübertragung nach Anspruch 1 und
das Datenempfangsverfahren nach Anspruch 24.

35. Datenübertragungs-/-empfangsverfahren nach Anspruch 34, wobei die Identifikatorinformationen zu einem Header des Datenpakets hinzugefügt werden.

36. Datenübertragungs-/-empfangsverfahren nach Anspruch 34, wobei das Datenpaket von einem Echtzeit-Transportprotokoll übertragen wird.

37. Datenübertragungs-/-empfangsverfahren nach Anspruch 34, wobei das Ausgeben der Retransmissionssteuerinformationen Folgendes umfasst:
Identifizieren einer Paketnummer des empfangenen Datenpakets, bei dem ein Fehler auftrat,
Ermitteln der Identifikatorinformationen des empfangenen Datenpakets, bei dem ein Fehler auftrat,
Erzeugen der Retransmissionssteuerinformationen auf Basis der ermittelten Paketnummer und der Identifikatorinformationen, und
Übertragen der erzeugten Retransmissionssteuerinformationen.

38. Datenübertragungs-/-empfangsverfahren nach Anspruch 37, wobei die Retransmissionssteuerinformationen eine Paketnummer des empfangenen Datenpakets, bei dem ein Fehler auftrat, und eine Retransmissionenzahl aufweisen.

39. Datenübertragungs-/-empfangsverfahren nach Anspruch 38, das ferner die Retransmission eines Datenpakets als Reaktion auf eine Retransmissionsanforderung gemäß der für die Paketnummer festgesetzten Retransmissionenzahl aufweist.

40. Datenübertragungs-/-empfangsverfahren nach Anspruch 38, wobei die Retransmissionssteuerinformationen eine Paketnummer des empfangenen Datenpakets, bei dem ein Fehler auftrat, und eine Retransmissionspriorität aufweisen.

41. Datenübertragungs-/-empfangsverfahren nach Anspruch 40, das ferner die Retransmission eines Datenpakets als Reaktion auf eine Retransmissionsanforderung gemäß der für jedes Datenpaket festgelegten Retransmissionspriorität umfasst.

42. Datenübertragungs-/-empfangsverfahren nach Anspruch 34, wobei die Retransmissionssteuerinformationen von einem Echtzeit-Transportsteuerungsprotokoll übertragen werden.

43. Verfahren nach Anspruch 34 zum Streaming von Multimedia-Daten über ein Netzwerk, umfassend:
Steuern von RTP-Datenpaketretransmissionen bei verlorenen und/oder beschädigten Datenpaketen gemäß Streaming-Wiederherstellungseigenschaften der Multimedia-Daten,
wobei die Daten intrabildcodierte Rahmen und interbildcodierte Rahmen umfassen und die Identifikatorinformationen in den intrabildcodierten Rahmen eingeschlossen sind, wobei die Identifikatorinformationen eine höhere Retransmissionspriorität für die intrabildcodierten Rahmen als für die interbildcodierten Rahmen spezifizieren.

## Revendications

1. Procédé de transmission de données pour des données multimédia, le procédé comprenant les opérations consistant à générer (500) des paquets de données contenant des données multimédia destinées à être transmises, et à transmettre (520) lesdits paquets vers un poste distant en utilisant un protocole sans connexion, cas dans lequel les données comportent des trames codées intra-image et des trames codées inter-image, alors que des données pour chaque trame sont divisées parmi une pluralité desdits paquets,
le procédé comprenant l'adjonction d'informations d'identifiant aux trames codées intra-image, les informations d'identifiant spécifiant une priorité de retransmission plus élevée pour les trames codées intra-image que pour les trames codées inter-image ;
cas dans lequel les informations d'identifiant englobent un identifiant de type de données lequel procure une indication d'une trame codée intra-image ou d'une trame codée inter-image, un identifiant de séquence de la position de la trame au sein de la transmission, et un identifiant de séquence de génération de paquets lequel identifie la position de la séquence de génération de paquets pour le paquet en question parmi la pluralité de paquets constituant chaque trame.

2. Procédé de réception de données transmises par un procédé selon la revendication 1, le procédé comprenant les opérations consistant à détecter des paquets perdus ou altérés, à déterminer les identifiants de type de données pour les paquets perdus ou altérés, et à demander la retransmission de paquets perdus ou altérés, cas dans lequel un ou plusieurs paramètres pour la retransmission demandée sont définis en fonction des identifiants de types de données ayant été déterminés.

3. Procédé selon la revendication 2, ledit paramètre ou lesdits paramètres étant une priorité et/ou des reprises de retransmission.

4. Procédé selon la revendication 1, les informations d'identifiant étant ajoutées à un en-tête du paquet de données.

5. Procédé selon la revendication 1 ou 4, comprenant en outre les opérations consistant à :
recevoir des informations de commande de retransmission sur un paquet de données à occurrence d'erreurs ; et
retransmettre le paquet de données à occurrence d'erreurs en conformité avec les informations de commande de retransmission.

6. Procédé selon la revendication 5, les informations de commande de retransmission englobant un numéro de paquet pour le paquet de données à occurrence d'erreurs, et un nombre de reprises de retransmission.

7. Procédé selon la revendication 6, un paquet de données correspondant au numéro de paquet étant retransmis en conformité avec le nombre de reprises de retransmission défini pour le numéro de paquet en question.

8. Procédé selon l'une quelconque des revendications 1, 4 ou 5, les informations de commande de retransmission englobant un numéro de paquet pour le paquet de données à occurrence d'erreurs, et une priorité de retransmission.

9. Procédé selon la revendication 8, un paquet de données correspondant au numéro de paquet étant retransmis en conformité avec la priorité de retransmission définie pour chaque paquet de données.

10. Procédé selon l'une quelconque des revendications 1 ou 4 à 9, le paquet de données étant transmis par un protocole de transport en temps réel.

11. Appareil de transmission de données pour transmettre des données multimédia, l'appareil comprenant des moyens (42) pour générer des paquets de données contenant des données multimédia destinées à être transmises ainsi que des moyens (44) pour transmettre lesdits paquets vers un poste distant en utilisant un protocole sans connexion, cas dans lequel les données comportent des trames codées intra-image et des trames codées inter-image, alors que des données pour chaque trame sont divisées parmi une pluralité desdits paquets,
les moyens de génération de paquets de données étant configurés pour ajouter des informations d'identifiant aux trames codées intra-image, les informations d'identifiant spécifiant une priorité de retransmission plus élevée pour les trames codées intra-image que pour les trames codées inter-image ;
cas dans lequel les informations d'identifiant englobent un identifiant de type de données lequel procure une indication d'une trame codée intra-image ou d'une trame codée inter-image, un identifiant de séquence de la position de la trame au sein de la transmission, et un identifiant de séquence de génération de paquets lequel identifie la position de la séquence de génération de paquets pour le paquet en question parmi la pluralité de paquets constituant chaque trame.

12. Appareil de transmission de données selon la revendication 11, comprenant :
un générateur de paquets (42) pour générer les paquets de données contenant des informations d'identifiant suivant un genre de trame, une séquence de trames, et une séquence de génération de paquets pour un paquet formant ladite trame ;
un transmetteur de paquets (44) pour transmettre le paquet de données contenant les informations d'identifiant ;
un récepteur (45) pour recevoir les informations de commande de retransmission, lesquelles sont basées sur les informations d'identifiant, pour un paquet de données à occurrence d'erreurs ; et
un retransmetteur (48) pour retransmettre le paquet de données à occurrence d'erreurs en conformité avec les informations de commande de retransmission.

13. Appareil de transmission de données selon la revendication 12, le générateur de paquets (42) étant agencé pour ajouter les informations d'identifiant à un en-tête du paquet de données.

14. Appareil de transmission de données selon la revendication 12, les informations de commande de retransmission englobant un numéro de paquet pour le paquet de données à occurrence d'erreurs, et un nombre de reprises de retransmission.

15. Appareil de transmission de données selon la revendication 14, le retransmetteur (48) étant agencé pour retransmettre un paquet de données correspondant au numéro de paquet en conformité avec le nombre de reprises de retransmission défini pour le numéro de paquet en question.

16. Appareil de transmission de données selon la revendication 12, les informations de commande de retransmission englobant un numéro de paquet pour le paquet de données à occurrence d'erreurs, et une priorité de retransmission.

17. Appareil de transmission de données selon l'une quelconque des revendications 12 à 16, le retransmetteur (48) étant agencé pour retransmettre un paquet de données correspondant au numéro de paquet en conformité avec la priorité de retransmission définie pour chaque paquet de données.

18. Appareil de transmission de données selon la revendication 12, le paquet de données étant transmis par un protocole de transport en temps réel.

19. Système de réception de données (60), comprenant :
un communicateur de données (62) qui reçoit un paquet de données, et transmet des informations de commande de retransmission relatives à un paquet de données à occurrence d'erreurs ayant été reçu ;
cas dans lequel les données comprennent des trames codées intra-image et des trames codées inter-image, alors que des données pour chaque trame sont divisées parmi une pluralité desdits paquets, et
un contrôleur de retransmission (64) qui détermine un numéro de paquet et des informations d'identifiant relatives au paquet de données à occurrence d'erreurs ayant été reçu, les informations d'identifiant contenant des informations concernant une indication d'une trame codée intra-image ou d'une trame codée inter-image, un identifiant de séquence de la position de la trame au sein de la transmission, et un identifiant de séquence de génération de paquets lequel identifie la position de la séquence de génération de paquets pour le paquet en question parmi la pluralité de paquets constituant chaque trame,
qui génère les informations de commande de retransmission en conformité avec le numéro de paquet déterminé et les informations d'identifiant, et qui produit les informations de commande de retransmission ;
et les informations d'identifiant étant incluses aux trames codées intra-image, les informations d'identifiant spécifiant une priorité de retransmission plus élevée pour les trames codées intra-image que pour les trames codées inter-image.

20. Système de réception de données selon la revendication 19, le contrôleur de retransmission comprenant :
un identificateur (65) pour identifier le numéro de paquet relatif au paquet de données à occurrence d'erreurs ayant été reçu ;
un dispositif de détermination d'informations d'identifiant (66) pour déterminer les informations d'identifiant relatif au paquet de données à occurrence d'erreurs ayant été reçu ; et
un générateur d'informations de commande de retransmission (67) pour générer les informations de commande de retransmission.

21. Système de réception de données selon la revendication 19 ou 20, les informations de commande de retransmission englobant un numéro de paquet relatif au paquet de données à occurrence d'erreurs ayant été reçu, et un nombre de reprises de retransmission.

22. Système de réception de données selon la revendication 19 ou 20, les informations de commande de retransmission englobant un numéro de paquet pour le paquet de données à occurrence d'erreurs ayant été reçu, et une priorité de retransmission.

23. Système de réception de données selon l'une quelconque des revendications 19 à 22, les informations de commande de retransmission étant transmises par un protocole de transport en temps réel.

24. Procédé de réception de données, comprenant les opérations consistant à :
identifier un numéro de paquet relatif à un paquet de données à occurrence d'erreurs ayant été reçu ; cas dans lequel les données comportent des trames codées intra-image et des trames codées inter-image, alors que des données pour chaque trame sont divisées parmi une pluralité desdits paquets,
déterminer (710) des informations d'identifiant relatives au paquet de données à occurrence d'erreurs ayant été reçu, les informations d'identifiant contenant des informations concernant une indication d'une trame codée intra-image ou d'une trame codée inter-image, un identifiant de séquence de la position de la trame au sein de la transmission, et un identifiant de séquence de génération de paquets lequel identifie la position de la séquence de génération de paquets pour le paquet en question parmi la pluralité de paquets constituant chaque trame, et une séquence de génération de paquets pour un paquet formant ladite trame ;
générer (720) des informations de commande de retransmission basées sur le numéro de paquet déterminé et les informations d'identifiant ; et
transmettre (730) les informations de commande de retransmission générées ;
cas dans lequel les données englobent des trames codées intra-image et des trames codées inter-image, et les informations d'identifiant sont incluses aux trames codées intra-image, les informations d'identifiant spécifiant une priorité de retransmission plus élevée pour les trames codées intra-image que pour les trames codées inter-image.

25. Procédé de réception de données selon la revendication 24, les informations de commande de retransmission englobant un numéro de paquet relatif au paquet de données à occurrence d'erreurs ayant été reçu, et un nombre de reprises de retransmission.

26. Procédé de réception de données selon la revendication 24, les informations de commande de retransmission englobant un numéro de paquet relatif au paquet de données à occurrence d'erreurs ayant été reçu, et une priorité de retransmission.

27. Procédé de réception de données selon l'une quelconque des revendications 24 à 26, les informations de commande de retransmission étant transmises par un protocole de transport en temps réel.

28. Système de transmission/de réception de données (80), comprenant :
un transmetteur de données (40) selon la revendication 11 ; et
un récepteur de données (60) selon la revendication 19.

29. Système de transmission/de réception de données selon la revendication 28, le transmetteur de données englobant un appareil de transmission de données selon l'une quelconque des revendications 13 à 18.

30. Système de transmission/de réception de données selon la revendication 28 ou 29, le récepteur de données englobant un système de réception de données selon l'une quelconque des revendications 20 à 23.

31. Système de transmission/de réception de données selon la revendication 30 pour transmettre/recevoir des données multimédia en flux continu par le biais d'un réseau :
le transmetteur de données (40) comprenant un processeur informatique programmé lequel détecte les types de trame sur les données multimédia, génère des informations d'identification basées sur les types de trame, génère des paquets de données RTP contenant les informations d'identification, transmet les paquets de données RTP ainsi générés, et retransmet des paquets de données RTP perdus et/ou endommagés en conformité avec les informations de commande de retransmission ayant été reçues ; et
le récepteur de données (60) comprenant un processeur informatique programmé lequel reçoit les paquets de données RTP générés, génère des informations de commande de retransmission basées sur les informations d'identifiant dans les paquets de données RTP reçus lors de la perte et/ou de l'endommagement sur les paquets de données RTP, transmet les informations de commande de retransmission au transmetteur, et reçoit les paquets de données RTP perdus et/ou endommagés ayant été retransmis.

32. Système de transmission/de réception de données selon la revendication 31, le processeur générant en outre, à titre d'informations d'identifiant, une séquence de génération de paquets correspondant à des trames divisées qui ont été transmises dans les paquets de données RTP.

33. Système de transmission/de réception de données selon la revendication 31 ou 32, les données multimédia étant codées suivant la norme MPEG.

34. Procédé de transmission/de réception de données, comprenant :
le procédé de transmission de données selon la revendication 1 ; et
le procédé de réception de données selon la revendication 24.

35. Procédé de transmission/de réception de données selon la revendication 34, les informations d'identifiant étant ajoutées à un en-tête du paquet de données.

36. Procédé de transmission/de réception de données selon la revendication 34, le paquet de données étant transmis par un protocole de transport en temps réel.

37. Procédé de transmission/de réception de données selon la revendication 34, la production des informations de commande de retransmission comprenant les opérations consistant à :
identifier un numéro de paquet relatif au paquet de données à occurrence d'erreurs ayant été reçu ;
déterminer les informations d'identifiant relatives au paquet de données à occurrence d'erreurs ayant été reçu ;
générer les informations de commande de retransmission basées sur le numéro de paquet déterminé et les informations d'identifiant ; et
transmettre les informations de commande de retransmission générées.

38. Procédé de transmission/de réception de données selon la revendication 37, les informations de commande de retransmission englobant un numéro de paquet relatif au paquet de données à occurrence d'erreurs ayant été reçu, et un nombre de reprises de retransmission.

39. Procédé de transmission/de réception de données selon la revendication 38, comprenant en outre la retransmission d'un paquet de données, en réponse à une demande de retransmission, en conformité avec les reprises de retransmission définies pour le numéro de paquet en question.

40. Procédé de transmission/de réception de données selon la revendication 38, les informations de commande de retransmission englobant un numéro de paquet pour le paquet de données à occurrence d'erreurs ayant été reçu, et une priorité de retransmission.

41. Procédé de transmission/de réception de données selon la revendication 40, comprenant en outre la retransmission d'un paquet de données, en réponse à une demande de retransmission, en conformité avec la priorité de retransmission définie pour chaque paquet de données.

42. Procédé de transmission/de réception de données selon la revendication 34, les informations de commande de retransmission étant transmises par un protocole de transport en temps réel.

43. Procédé selon la revendication 34 consistant à obtenir des données multimédia en flux continu par le biais d'un réseau, comprenant l'opération consistant à :
piloter les retransmissions de paquets de données RTP lors de la perte et/ou de l'endommagement sur des paquets de données, en conformité avec des caractéristiques de flux continu/de restauration des données multimédia,
cas dans lequel les données comportent des trames codées intra-image et des trames codées inter-image, et les informations d'identifiant sont incluses aux trames codées intra-image, les informations d'identifiant spécifiant une priorité de transmission plus élevée pour les trames codées intra-image que pour les trames codées inter-image.
